# EUROPÄISCHE PATENTSCHRIFT

(11) **EP 1 584 199 B1**
(45) Veröffentlichungstag und Bekanntmachung des Hinweises auf die Patenterteilung: **03.07.2019**
(21) Anmeldenummer: 03795799.0
(22) Anmeldetag: 23.10.2003
(51) Int. Cl.: H04N 13/00

(54) **STEREOPROJEKTIONSVORRICHTUNG**
STEREO PROJECTION DEVICE
DISPOSITIF DE PROJECTION STÉRÉOSCOPIQUE

(30) Priorität: 24.10.2002 DE 10249815
(43) Veröffentlichungstag der Anmeldung: 12.10.2005
(73) Patentinhaber: Infitec GmbH, 89081 Ulm (DE)
(72) Erfinder: JORKE, Helmut, 89547 Gerstetten (DE)
(74) Vertreter: Straub, Bernd
(86) Internationale Anmeldenummer: PCT/EP2003/011748
(87) Internationale Veröffentlichungsnummer: WO 2004/038457

(56) Entgegenhaltungen:
- EP-A2- 0 716 330
- WO-A-02/32149
- DE-U1- 29 614 692
- JP-A- 11 264 953
- US-A- 3 903 358
- US-A- 5 774 196
- US-A- 5 905 545
- US-A1- 2001 043 213

## Beschreibung

Die Erfindung betrifft ein Stereoprojektionssystem und eine Projektionsvorrichtung für ein solches.

Aus dem deutschen Gebrauchsmuster DE 296 14 692 U1 und den europäischen Patenten EP 749 250 B1 und EP 565 218 B1 sind Projektionsvorrichtungen mit einer Lichtquelle, einem Farbrad mit mehreren Filtern, insbesondere Interferenzfiltern, einer bildgebenden Einheit, einer Projektionsoptik und einer Steuerung zur Synchronisation der bildgebenden Einheit mit dem Farbrad bekannt.

Dabei zeigt das deutsche Gebrauchsmuster DE 296 14 692 U1 eine Projektionsvorrichtung für die 2D-Projektion, welche ein Farbrad mit drei ringförmig angeordneten breitbandigen Farbfiltern zeigt, wobei die Farbfilter zur Verbesserung der Projektionsqualität und Effizienz ohne Trägerelemente und ohne durch Haltestege getrennt voneinander ausgebildet sind. Aus der japanischen Patentanmeldung JP 11-2649953 A1 und dem US-Patent US 5,774,196 B1 sind Projektionsvorrichtungen mit einem Farbrad bekannt, die sich eingehend der Verbesserung der Synchronisierung der Rotation der Filter des Farbrades mit der Lichtquelle beziehungsweise der bildgebenden Einheit beschäftigen. Dem US-Patent US 5,905,545 B1 ist ein Vollfarben-Projektionssystem für die 2D-Bildwiedergabe bekannt, das sich durch einen erweiterten Farbraum auszeichnet. Dieser erweiterte Farbraum wird dadurch erreicht, dass die Bildinformationen mittels zweier Projektionsmechanismen unterschiedlicher Farbräume auf einen gemeinsamen Schirm projiziert werden. Hierbei werden teilweise Farbräder mit dichroitischen Filtern verwendet.

Um eine Überhitzung und damit Schädigung der Projektionsvorrichtung bei gleichzeitiger guter Farbsättigung zu erreichen, werden bei derartigen Projektionsvorrichtungen auch Interferenzfilter mit breiten Durchlassbereichen im Bereich von 50 nm oder höher verwendet.

Aus dem deutschen Patent DE 100 05 335 C2, das der US-Patentanmeldung US 2001/043213 A1 der Anmelderin entspricht, ist ein Stereoprojektionssystem bekannt, das Projektionsvorrichtungen ohne Farbrad zeigt, die für die Projektion eines Halbbildes einen starren, statischen Interferenzfilter mit mehreren schmalbandigen Durchlassbereichen aufweist. Diese Projektionsvorrichtungen ermöglichen es mehreren Personen aufgrund differenzierter und starrer, statischer Interferenzfilter zugleich differenzierte Stereobildinformationen auf einer gemeinsamen Projektionsfläche wahrzunehmen.

Aus der internationalen Patentanmeldung WO 02/32149 A2 ist ein weiteres Stereoprojektionssystem bekannt. Dieses zeigt ein Farbrad, das mit mehreren ringförmig angeordneten Filtern zur Erzeugung der Stereohalbbilder versehen ist. Dabei sind unterschiedliche Möglichkeiten offenbart, bei denen immer ein Teil der Farbfilter mit einer Polarisationsart für ein Halbbild und eine andere Polarisationsart für das andere Halbbild verwendet wird, wobei bei den unterschiedlichen Beispielen innerhalb der Polarisation eine unterschiedliche Anzahl an verschiedenen breitbandigen Farbfiltern verwendet wird. Durch eine entsprechende Synchronisation des Farbrades mit der bildgebenden Einheit lässt sich das Stereobild mit einer derartigen Stereoprojektionsvorrichtung auf einen Projektionsschirm projizieren und mittels einer selektiven Stereobrille in die Halbbilder trennen. Dieses Stereoprojektionssystem zeichnet sich durch ein wenig angenehmes Farbempfinden aus.

Der Erfindung liegt die Aufgabe zugrunde, ein Stereoprojektionssystem bzw. eine Projektionsvorrichtung anzugeben, welche für die Verwendung in einem Stereoprojektionssystem geeignet ist, welche kostengünstig zu realisieren sind, eine gute Kanaltrennung aufweisen und ein angenehmes Farbempfinden zeigen.

Diese Aufgabe wird durch eine Projektionsvorrichtung mit den Merkmalen des Patentanspruchs 1 gelöst.

Vorteilhafte Ausbildungen der Erfindung sind Gegenstand der Unteransprüche.

Die Erfindung macht sich zueigen, die bekannten Projektionsvorrichtungen mit einer Lichtquelle, einem Farbrad mit mehreren Interferenzfiltern, einer bildgebenden Einheit, einer Projektionsoptik und einer Steuerung zur Synchronisation der bildgebenden Einheit mit einem Farbrad dahingehend weiterzubilden, dass sie mit einer zweiten oder mit weiteren Projektionsvorrichtung so zusammenwirken können, dass sie ein angenehmes Stereobilderlebnis ermöglichen bzw. selbst die weitere Projektionsvorrichtung darstellen. Hierfür ist es erforderlich, einerseits die Projektionsvorrichtungen so aufeinander abzustimmen, dass sie dieselbe Projektionsfläche ohne wesentlichen Versatz überdecken und zeitlich bezüglich der zu projizierenden Bilddaten so abgestimmt sind, dass die Wahrnehmung der Stereobildinformationen nicht gestört ist. Dies erfolgt primär über geeignete Ausrichtung der Projektionsvorrichtungen sowie durch entsprechende gemeinsame Steuerung und ggf. über ein die Möglichkeit einer gemeinsamen Datenversorgung aus einer Datenquelle. Als Datenquelle wird bevorzugt ein Rechnersystem zur Generierung von Virtual-Reality Bilddaten verwendet, mit welchen Stereobilddaten für virtuelle Gegenstände geschaffen werden, welche mittels erfindungsgemäßen Projektionsvorrichtungen auf entsprechende Projektionsflächen projiziert werden.

Die erfindungsgemäßen Projektionsvorrichtungen zeigen jeweils ein Farbrad, das eines oder mehrere Filtertriplets aus Interferenzfiltern zeigt, wobei die Triplets jeweils einen schmalbandigen Interferenzfilter der Farben rot, grün oder blau aufweisen. Dabei ist die Bandbreite des Durchlassbereiches des schmalbandigen Interferenzfilter so gewählt, dass er typischerweise unter 30 nm und insbesondere im Bereich von 20 nm liegt. Durch diese schmalbandigen Interferenzfiltern ist einerseits sichergestellt, dass ein Überlapp der verschiedenen Durchlassbereiche der einzelnen Interferenzfilter eines oder mehrerer Triplets nicht gegeben ist. Die Interferenzfilter zeichnen sich durch sehr hohe Flankensteilheit auf, was sich zusätzlich positiv zu der besonders schmalen Ausbildung der Durchlassbereiche der Filter zur Vermeidung von Überlappbereiche hinzutritt. Durch die schmalbandige Ausbildung der Interferenzfilter für das Farbrad ist durch die besonders hohe spektrale Reinheit des Farbsignals ein sehr angenehmes Farbempfinden gegeben, zumal die Wahl der drei Farben der Interferenzfilter eines Triplets den drei Farbrezeptoren des menschlichen Auges so angepasst ist, dass die besondere Wirkung im Hinblick auf angenehmes Farbempfinden besonders ausgeprägt gegeben ist.

Auch erweist sich die Projektionsvorrichtung als sehr kostengünstig, da sich für diese Art von Projektionsvorrichtung einerseits eine einfache und kostengünstige breitbandige Lichtquelle und zum andern eine einfache bildgebende Einheit, die nicht eine differenzierte, parallele Erzeugung von Bildern in den drei Grundfarben benötigt. Eine sogenannte Single-Chip bildgebende Einheit, die als DMD-, DLP-, DILA- oder LCDbildgebende Einheit realisiert ist, genügt für eine erfindungsgemäße Projektionsvorrichtung. Diese sogenannten Single-Chip bildgebenden Einheiten erweisen sich als wesentlich kostengünstiger als entsprechende 3Chip-Lösungen.

Nach einer Ausbildung der Erfindung wird die schmale Bandbreite der Interferenzfilter eines Triplets unterschiedlich für die verschiedenen Farben gewählt, wobei die Bandbreite der Interferenzfilter im Bereich höherer, größerer Wellenlängen größer gewählt wird als die Bandbreiten der Interferenzfilter im Bereich geringerer Wellenlänge. Dies führt dazu, dass die Interferenzfilter der Farbe rot eine größere Bandbreite aufweisen als die der Farbe grün bzw. die der Farbe blau. Durch diese differenzierten Bandbreiten der Interferenzfilter des Triplets gelingt es, die längeren, größeren Wellenlängen stärker zu betonen und dadurch einen wärmeren Farbeindruck zu erreichen. Dies erweist sich in Verbindung mit den typischerweise kalten, breitbandigen Lichtquellen wie Halogenlichtquellen von besonderem Vorteil. Durch diese besondere Wahl und Ausgestaltung der schmalbandigen Interferenzfilter wird ein sehr angenehmes Projektionsverhalten der Projektionsvorrichtung erreicht, ohne dass es aufwendige elektronische Beschaltungen oder Anpassungen der Bilddaten insbesondere im Hinblick auf Farbkorrekturen erfordert.

Dabei hat es sich im besonderen bewährt, das Verhältnis aus Bandbreite und mittlerer Wellenlänge des Durchlassbereichs eines schmalbandigen Interferenzfilters in dem Bereich von 4 % zu wählen. Dies führt dazu, dass ein besonders gleichmäßiges und angenehmes Farbempfinden gegeben ist. Aus den verschiedenen Möglichkeiten, eine differenzierte Bandbreite in Abhängigkeit der vorgegebenen Wellenlängen des Durchlassbereiches zu wählen hat sich diese als besonders vorteilhaft und fertigungstechnisch gut realisierbar herausgestellt.

Eine besonders vorteilhafte Projektionsvorrichtung zeichnet sich dadurch aus, dass das Farbrad wenigstens zwei Triplets aus schmalbandigen Interferenzfiltern aufweist. Dabei sind die mittleren Wellenlängen der Durchlassbereiche der Interferenzfilter gleicher Farbe so gewählt, dass sie im wesentlichen symmetrisch um folgende Symmetriewellenlängen für die Farbe blau im Bereich von 450 nm für die Farbe grün im Bereich von 540 nm und die Farbe rot im Bereich von 630 nm angeordnet sind. Durch die sehr schmalbandigen Interferenzfilter mit einer typischen Bandbreite von etwa 20 nm ist sichergestellt, dass ein Übersprechen des einen Filters auf den anderen Filter bzw. das Übersprechen der Bildinformationen, die durch den einen Filter gelangen, auf die Bildinformation des Lichtes, das durch den anderen Filter gelangt, verhindert ist indem die beiden oder die mehreren Interferenzfilter einer Farbe ohne Überlapp und mit ausreichendem Abstand, der vorzugsweise der etwa 10 nm beträgt, bei der sehr hohen Flankensteilheit der Interferenzfilter gewählt sind. Hierdurch gelingt es sehr farbechte und kontrastreiche Bilder zu projizieren, was insbesondere für die Stereoprojektion von besonderer Bedeutung ist. Hier wirkt es sich in besonderem Maße aus, da die beiden vergleichbaren Information der beiden Halbbilder einmal für das linke Auge und einmal für das rechte Auge sicher voneinander getrennt und in sehr angenehmen Farben und bei großer Farbsättigung projiziert werden können. Wird der Abstand der Durchlassbereiche geringer gewählt bzw. die besondere Lage der Symmetriewellenlängen nicht so gewählt, so führt das regelmäßig zu einer unerwünschten Verschlechterung des Farbempfindens.

Als ausgesprochen vorteilhafte Ausbildung eines Farbrades für eine erfindungsgemäße Projektionsvorrichtung hat es sich herausgestellt, zwei Triplets vorzusehen. Dabei sind die beiden roten Interferenzfilter der beiden Triplets mit einem Durchlassbereich von 660 bis 635 nm bzw. von 625 bis 600 nm gewählt. Die beiden Durchlassbereiche der grünen Interferenzfilter sind von 565 bis 545 nm bzw. von 535 bis 515 nm und die Durchlassbereiche der blauen Interferenzfilter von 470 bis 455 nm bzw. von 445 bis 430 nm gewählt. Durch diese besondere Wahl der Durchlassbereiche der beiden Filtertriplets ist sichergestellt, dass einerseits eine ausreichende Beabstandung der Durchlassbereiche der Interferenzfilter gleicher Farbe gegeben ist, was zu einer sicheren Trennung der Durchlassbereiche führt. Darüber hinaus ist durch die größeren Bandbreiten der Durchlassbereiche bei längeren Wellenlängen also für die rote Farbe gegenüber der grünen und selbst wiederum gegenüber der blauen Farbe der Interferenzfilter ein sehr angenehmes Farbempfinden gegeben. Durch die schmalbandigen Filter ist zudem ein sehr farbreines, farbsattes Farbempfinden der projizierten Informationen insbesondere der generierten Virtual-Reality Bilddaten gewährleistet. Diese führt zu einer sehr kostengünstigen Projektionsvorrichtung, die ohne dass eine weitere Projektionsvorrichtung benötigt wird für sich allein ein Stereoprojektionssystem ermöglicht. Hierbei wird jedes Halbbild der Stereobilder unter Verwendung eines Filtertriplets projiziert. Diese zeichnet sich zudem durch ein sehr gutes Bild aus.

Daneben hat es sich besonders bewährt, die Interferenzfilter gleicher Farbe mehrerer Triplets auf einer Kreislinie nebeneinander, aufeinanderfolgend auf dem Farbrad anzuordnen. Hierdurch lässt sich eine besonders einfache und sichere Synchronisation der bildgebenden Einheit mit den Interferenzfiltern des Farbrades sicherstellen, da die Wechsel der Informationen nun zwar bei höheren Frequenzen aber sehr gleichmäßig erfolgt. Damit ist ohne große technische Schwierigkeiten ein angenehmeres Bildempfinden gewährleistet.

Eine weitere Ausbildung der Erfindung betrifft ein Stereoprojektionssystem mit einer Projektionsfläche und wenigstens einer Projektionsvorrichtung, deren Farbrad wenigstens zwei Triplets zur Erzeugung der voneinander getrennten Halbbilder aufweist bzw. durch wenigstens zwei Projektionsvorrichtungen, die ein Farbrad mit wenigstens einem Triplet aufweisen, welche ihr Halbbild bzw. ihre Halbbilder auf die Projektionsfläche werfen. Darüber hinaus zeigt das Stereoprojektionssystem regelmäßig eine bilddatenerzeugende Einheit, die typischerweise als Workstation oder als PC ausgebildet ist und die die jeweilige bildgebende Einheit in den verschiedenen Projektionsvorrichtungen ansteuert. Zusätzlich wird durch diese Vorrichtung auch die Synchronisation der verschiedenen Projektionsvorrichtungen und damit die zeitlich korrekte Darstellung der Halbbilder gewährleistet. Um den Stereoeffekt zu erreichen wird jedes Halbbild mit voneinander klar getrennten Interferenzfiltern, d. h. ohne Überlapp der Durchlassbereiche der Triplets projiziert, so dass durch entsprechende Brillen mit Interferenzfiltern mit einer Tripletstruktur gewährleistet ist, dass das linke Auge jeweils nur das eine Halbbild wahrnehmen kann während das andere Auge jeweils nur das andere Halbbild mit dem anderen Triplet wahrnehmen kann. Im Gegensatz zu den Interferenzfiltern auf dem Farbrad zeigen die Interferenzfilter der Brillen eine Durchlasskurve, die das Licht von einem Triplet ungedämpft durchlässt, während das Licht, welches die Interferenzfilter des anderen Triplets passiert hat, zurückgehalten wird. Durch diese Ausbildung des einen Brillenglas ist sichergestellt, dass nur das eine Halbbild entsprechend dem ersten Triplet sichtbar ist; das andere Halbbild entsprechend dem zweiten Triplet wird vollständig herausgefiltert. In umgekehrter Weise ist das zweite Brillenglas realisiert. Dieses lässt das Halbbild, welches durch die Interferenzfilter des zweiten Triplets hindurch getreten ist ungehindert durch, während es das erste Halbbild, welches durch die Interferenzfilter des ersten Triplets hindurchgetreten ist, vollständig zurückhält. Hierdurch ist eine sichere Trennung der Halbbilder gewährleistet. Der Stereoeffekt durch die flächige Überlagerung der beiden Halbbilder durch die Projektionsvorrichtungen auf der Projektionsfläche mit der anschließenden Trennung für die Augen ist in besonders wirkungsvoller und kostengünstiger Weise bei Erhalt der vollen Farbsättigung und ohne merkliches Übersprechverhalten gewährleistet.

Im folgenden wird die Erfindung anhand von vorteilhaften Ausführungsbeispielen, welche in den Figuren dargestellt sind, erläutert.
- Fig. 1: zeigt ein beispielhaften systematischen Aufbau eines Stereoprojektionssystems;
- Fig. 2: zeigt den Aufbau eines beispielhaften Farbrades mit zwei Triplets und
- Fig. 3: zeigt die Durchlasskurven der sechs Interferenzfilter des Farbrades gemäß Fig. 2.

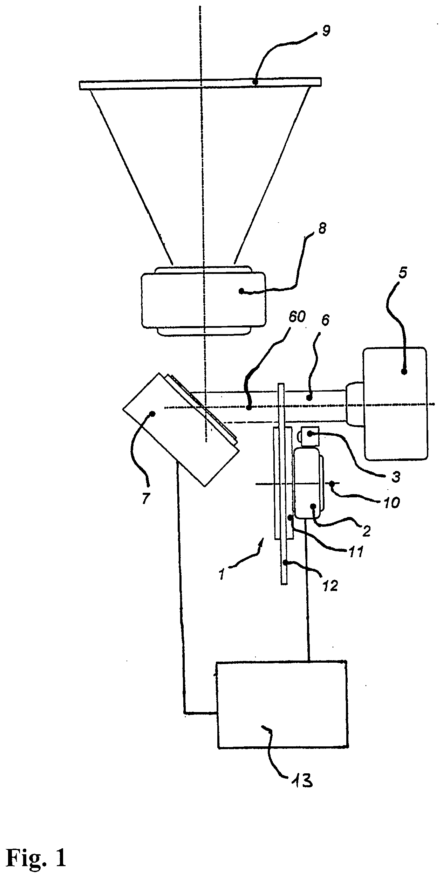

In der Fig. 1 ist eine schematische Darstellung eines Stereoprojektionssystems mit einer Projektionsvorrichtung dargestellt. Es ist ein Farbrad 1, das mit einem Motor 2 und einem Positionsmelder 3 gekoppelt ist, vorgesehen. Das Farbrad 1 weist einen Träger 11 auf, an dem die Interferenzfilter 12 befestigt sind. Aus der Lichtquelle 5, welche eine sehr leistungsstarke Lichtquelle insbesondere eine Halogenlichtquelle darstellt, tritt der Lichtstrahl 6 entlang einer optischen Achse 60 aus. Der Lichtstrahl 6 durchquert die Interferenzfilter 12 und trifft auf eine bildgebende Einheit 7, die als digital mirror device- (DMD-) oder als DLP- bildgebende Einheit realisiert ist. Das von der bildgebenden Einheit 7 generierte Bild wird einer Projektionsoptik 8 zugeführt und anschließend auf eine Projektionsfläche 9 projiziert.

Der Motor 2 versetzt das Farbrad 1 in Rotation, wodurch die Interferenzfilter 12 abwechselnd in den Lichtstrahl 6 gefahren werden. Welcher Interferenzfilter 12 gerade in den Lichtstrahl gefahren ist, wird über den Positionsmelder 3 bestimmt. Entsprechend des jeweiligen Interferenzfilters der sich im Lichtstrahl 6 befindet, wird in der bildgebenden Einheit 7 ein diesem Interferenzfilter 12 zugeordnetes Bild erzeugt und über die Projektionsoptik 8 auf die Projektionsfläche 9 projiziert. Die Synchronisation des Farbrades 1 und der zu projizierenden durch die bildgebende Einheit 7 generierten Bilder wird durch einen Computer 13 gewährleistet, der mit dem Motor 2 und dem Positionsmelder 3 sowie der bildgebenden Einheit 7 verbunden ist. Der Computer 13 erzeugt dabei die durch die bildgebende Einheit 7 zu generierenden Bilddaten.

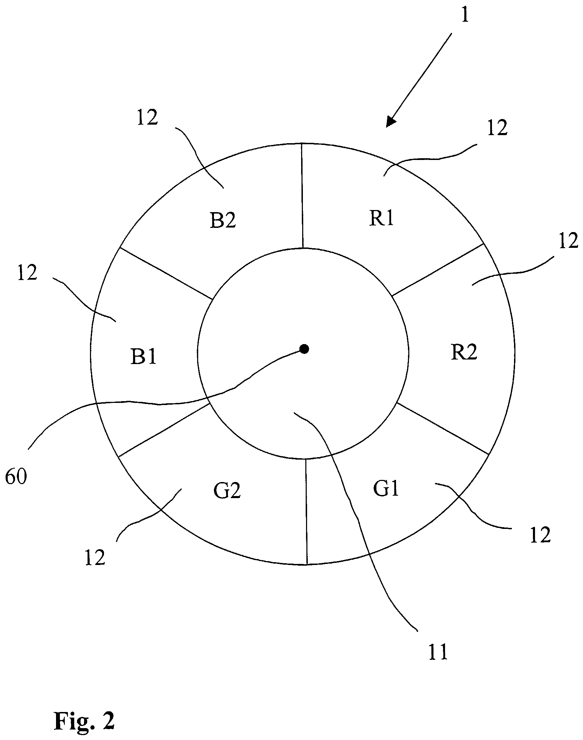

In Fig. 2 ist das Farbrad 1 dargestellt. In der Mitte befindet sich der Träger 11 um den sich kreisförmig die Interferenzfilter 12 anordnen. Das Farbrad 1 zeigt sechs Interferenzfilter 12, die jeweils zu zwei Triplets aus Interferenzfiltern der Farben rot, grün und blau zusammengefasst sind. Die Interferenzfilter zeigen eine sehr große Flankensteilheit, d. h. der Anstieg oder Abfall der Transmission von 100 % auf 0 % erfolgt in wenigen nm. Der Durchlassbereich der schmalbandigen Interferenzfiltern ist erfindungsgemäß unter 30 nm insbesondere im Bereich von 20 nm gewählt. Diese Interferenzfilter werden aus abwechselnden Schichten aus Titandioxid bzw. Lithiumdioxid aufgebaut. Die Dicke der Schichten wird entsprechend der gewünschten Filtercharakteristik dimensioniert. Entsprechendes gilt für die Anzahl der Schichten. Das Aufbringen der Filterschichten erfolgt bevorzugt durch Kathodenzerstäubungsverfahren wie Magnetronzerstäuben. Ein derartiges Verfahren ist aus der US 5,292,417 bekannt.

Das Farbrad 1 zeigt sechs Interferenzfilter, welche so auf einer Kreislinie angeordnet sind, dass die beiden roten Interferenzfilter gefolgt von den beiden grünen Interferenzfilter und diese wiederum gefolgt von den blauen Interferenzfiltern angeordnet sind. Die Durchlassbereiche der beiden roten Interferenzfilter sind so gewählt, dass sie sich von 660 bis 635 nm bzw. von 625 bis 600 nm erstrecken, die Durchlassbereiche der grünen Interferenzfilter erstrecken sich von 565 bis 545 nm bzw. von 535 bis 515 nm und die Durchlassbereiche der blauen Interferenzfilter von 470 bis 455 nm bzw. von 445 bis 430 nm. Damit wird deutlich, dass zwischen den Durchlassbereichen der Interferenzfilter gleicher Farbe ein Abstand in der Größenordnung von etwa 10 nm liegen und dass die Breite der Durchlassbereiche mit zunehmender Wellenlänge größer wird. Die Breite steigt von 15 nm für die blaue Farbe über 20 nm für die grünen Interferenzfilter bis zu 25 bei den roten Interferenzfiltern. Die Zunahme der Breite der Durchlassbereich entspricht einer Steigerung von 4 % abhängig von der mittleren Wellenlänge des Durchlassbereiches. Durch die symmetrische Anordnung der Durchlassbereiche der Interferenzfilter gleicher Farbe, für die roten Interferenzfilter um eine Symmetriemittelfrequenz im Bereich von 630 nm, für die grünen Interferenzfilter im Bereich von 540 und für die blauen Interferenzfilter im Bereich von 450 nm, gelingt es, ein sehr angenehmes warmes und farbgesättigtes Bild zu erreichen. Diese besondere Wahl der Filtercharakteristiken ermöglicht eine Kompensation des kalten Licht der Lichtquelle 5.

Entlang einer Kreislinie auf dem Farbrad 1 sind die Interferenzfilter 12 der beiden Triplets aus Interferenzfiltern 12 abwechselnd den Farben rot, grün, blau folgend angeordnet. Die bildgebende Einheit 7 generiert bei jedem neuen Interferenzfilter von den sechs aufeinanderfolgenden Interferenzfiltern ein neues Bild, das abwechselnd dem einen Halbbild für das eine Auge des Betrachters und anschließend dem anderen Halbbild für das andere Auge des Betrachters zur Erzeugung eines Stereoeffektes entspricht. Damit ist ein stetiges Wechseln der Halbbilder synchronisiert durch den Positionsmelder 3 in Verbindung mit dem Computer 13 und dem Motor 2 sowie der bildgebenden Einheit 7 erforderlich. Durch die besondere Anordnung der sechs Interferenzfiltern der zwei Triplets auf dem Farbrad 1 ist eine sichere Synchronisation der bildgebenden Einheit 7 mit dem Farbrad 1 ermöglicht.

Durch diese Ausbildung des Farbrades 1 und der Synchronisationssteuerung über den Computer 13 und den damit verbundenen Komponenten ist die beschriebene Projektionsvorrichtung in der Lage ohne weitere Projektionsvorrichtung ein stereoskopisches Bild auf die Projektionsfläche 9 zu werfen. Dieses wird durch einem mit einer Brille ausgestatteten Betrachter, welche mit Brillengläsern versehen ist, von denen ein Glas einen Durchlassbereich aufweist, welcher das Licht des einen Triplets ungehindert passieren lässt während es das Licht des anderen Triplets sperrt bzw. das andere Glas der Brille entsprechend umgekehrt versehen ist, so präsentiert, dass er den stereoskopischen Effekt der Bilder gut wahrnehmen kann. Durch diese Ausbildung der Brille mit entsprechenden Durchlassbereichen und Sperrbereichen der einzelnen Brillengläser ist ein sehr kostengünstiges und wirkungsvolles Projektionssystem gegeben, das mit einer einzigen Lichtquelle 5, einer einzigen Projektionsoptik 8 und einer einzigen bildgebenden Einheit 7 auskommt. Damit ist eine sehr gewichtssparende und kostengünstige Projektionsvorrichtung durch die Verwendung des in Fig. 2 dargestellten Farbrades in Verbindung mit den zusätzlichen Elementen der Projektionsvorrichtung insbesondere in Verbindung mit dem Computer 13, der die Steuerung der Projektionsvorrichtung bewirkt gegeben.

Insbesondere zeigt diese Art von Stereoprojektionssystem nicht die Notwendigkeit mehrere Projektionsvorrichtungen räumlich sehr exakt aufeinander dahingehend abzustimmen, dass der von ihnen beleuchtete Bereich der Projektionsfläche 9 deckungsgleich, gleichmäßig hell und von identischer Helligkeit ausgeleuchtet ist. Darüber hinaus zeigt das erfindungsgemäße Projektionssystem eine sehr farbechte und farbsatte Wiedergabe der Bilder, da die Bandbreiten der Triplets sehr schmal und damit sehr farbecht sind und in ihrer Lage sehr wirksam aufeinander abgestimmt sind. Diese Lage bezieht sich einerseits auf die symmetrische Anordnung der Interferenzfilter gleicher Farbe sowie auf die Lage der Symmetriewellenlängen.

Durch die Verwendung mehrerer derartiger Stereoprojektionssysteme, wie sie in Fig. 1 dargestellt sind, lässt sich eine sogenannte Cave für eine Virtual-Reality-Projektionsanwendung realisieren, indem derartige Stereoprojektionssysteme auf verschiedene Wände eines sogenannten Cave gerichtet werden und so aufeinander abgestimmt sind, dass es zu keinen störenden Überlappungen in Randbereich der Projektionsflächen kommt. Eine Anwendung in diesen Virtual-Reality-Bereich ist durch das besonders geringe Übersprechverhalten, die hohe Farbechtheit und die besondere Leuchtkraft der Farben besonders ermöglicht.

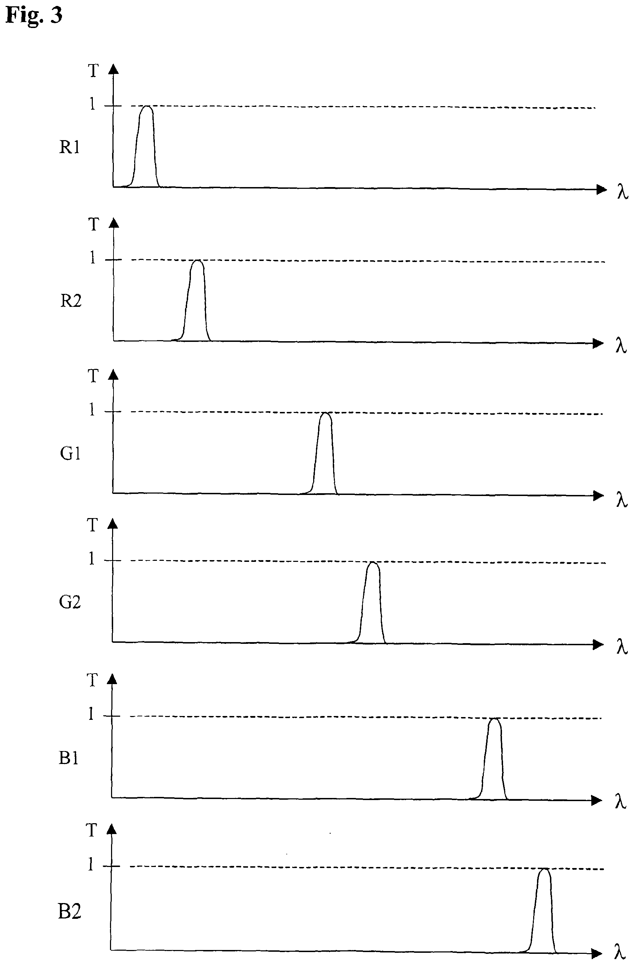

In Fig. 3 sind die Durchlasskurven der verschiedenen Interferenzfilter 12 des Farbrades 1 dargestellt. Es sind die sechs Transmissionskurven in der Reihenfolge der Anordnung auf dem Farbrad wiedergegeben. Zuerst wird der erste rote Interferenzfilter dargestellt gefolgt vom zweiten roten Interferenzfilter gefolgt vom ersten grünen gefolgt vom zweiten grünen gefolgt vom ersten blauen gefolgt vom zweiten blauen Interferenzfilter. Der erste zeigt einen Durchlassbereich von 660 bis 635 nm, der zweite rote von 625 bis 600 nm, der erste grüne von 565 bis 645 nm, der zweite grüne von 535 bis 515 nm, der erste blaue von 470 bis 455 nm und der zweite blaue Interferenzfilter von 445 bis 430 nm. Außerhalb des Durchlassbereiches ist der Durchlasskoeffizient verschwindend gering. Anhand der Fig. 3 wird deutlich, dass die Durchlassbereiche der verschiedenen Interferenzfilter 12 keinerlei Überlapp zeigen, was zu der besonders guten Kanaltrennung der zu projizierenden Halbbilder des Stereobildes führt. Durch die schmalen Bandbreiten von etwa 25, 20 und 15 nm wird ein sehr farbechter und warmer, ausgeglichener Farbeindruck der Bilder gewährleistet. Insbesondere gelingt es durch die größere Wahl der Bandbreite der roten Farben einen Ausgleich der kalten Farben, welche durch die starken Lichtquellen hervorgerufen werden, zu schaffen, was sich durch den sehr angenehmen Farbeindruck insbesondere bezüglich der Farbsättigung bemerkbar macht.

## Patentansprüche

1. Stereoprojektionsvorrichtung mit einer Lichtquelle (5), einem Farbrad (1) mit kreisförmig angeordneten Filtern, einer bildgebenden Einheit (7), einer Projektionsoptik (8) und einer Steuerung zur Synchronisation der bildgebenden Einheit mit dem Farbrad (1), wobei die Filter ein Triplet mit jeweils einer der Farben Rot, Grün, Blau aufweisen,
**dadurch gekennzeichnet,**
**dass** die Filter des Farbrads als Interferenzfilter (12) ausgebildet sind,
**dass** das Farbrad (1) mehrere Triplets aus Interferenzfiltern (12) und damit insgesamt mindestens sechs in einem Kreis angeordnete Interferenzfilter (12) unterschiedlicher Durchlassbereiche aufweist,
wobei die Triplets jeweils einen Interferenzfilter (12) der Farben Rot (R1, R2), Grün (G1, G2), Blau (B1, B2) aufweisen und wobei die Interferenzfilter (12) schmalbandige Filter mit einer Bandbreite unter 30 nm darstellen und
wobei die Bandbreite der schmalbandigen Interferenzfilter (12) eines Triplets größerer Wellenlänge größer als die Bandbreite der Interferenzfilter (12) geringerer Wellenlänge gewählt ist.

2. Stereoprojektionsvorrichtung nach Anspruch 2,
**dadurch gekennzeichnet,**
**dass** die Bandbreite eines Interferenzfilter (12) eines Triplets so gewählt ist, dass das Verhältnis aus Bandbreite zu mittlere Wellenlänge des Durchlassbereiches eines schmalbandigen Interferenzfilters (12) etwa 4 % beträgt.

3. Stereoprojektionsvorrichtung nach einem der vorstehenden Ansprüche,
**dadurch gekennzeichnet,**
**dass** das Farbrad (1) wenigstens zwei Triplets aufweist und die mittleren Wellenlängen der Durchlassbereich der Interferenzfilter (12) gleicher Farbe so gewählt sind, dass sie im wesentlichen symmetrisch um folgende Symmetrie-Wellenlängen für Blau 450 nm, für Grün 540 nm und für Rot 630 nm angeordnet sind.

4. Stereoprojektionsvorrichtung nach Anspruch 3,
**dadurch gekennzeichnet,**
**dass** die Durchlassbereiche der Interferenzfilter (12) gleicher Farbe einen Abstand zueinander von etwa 10 nm aufweisen.

5. Stereoprojektionsvorrichtung nach Anspruch 3 und 4,
**dadurch gekennzeichnet,**
**dass** die Durchlassbereiche der roten Interferenzfilter (12, R1, R2) von 660 bis 635 nm bzw. von 625 bis 600 nm, die Durchlassbereiche der grünen Interferenzfilter (12, G1, G2) von 565 bis 545 nm bzw. von 535 bis 515 nm, die Durchlassbereiche der blauen Interferenzfilter (12, B1, B2) von 470 bis 455 nm bzw. von 445 bis 430 nm gewählt sind.

6. Stereoprojektionsvorrichtung nach einem der vorstehenden Ansprüche 3 bis 5,
**dadurch gekennzeichnet,**
**dass** Interferenzfilter (12) gleicher Farbe mehrerer Triplets aufeinanderfolgend im Kreis auf dem Farbrad (1) angeordnet sind.

## Claims

1. A stereo-projection device having a light source (5), a color wheel (1) having filters arranged in a circular manner, an imaging unit (7), a projection optical system (8) and a controller for synchronizing the imaging unit with the color wheel (1), wherein the filters have a triplet with in each case one of the colors red, green, blue, **characterized in that** the filters of the color wheel are designed as interference filters (12), **in that** the color wheel (1) has a plurality of triplets consisting of interference filters (12) and which therefore comprise a total of at least six interference filters (12) of different passbands arranged in a circle, wherein the triplets each have an interference filter (12) of the colors red (R1, R2), green (G1, G2), blue (B1, B2) and wherein the interference filters (12) represent narrowband filters with a bandwidth below 30 nm and wherein the bandwidth of the narrowband interference filters (12) of a triplet of longer wavelength is selected to be greater than the bandwidth of the interference filters (12) of shorter wavelength.

2. The stereo-projection device according to claim 2, **characterized in that** the bandwidth of an interference filter (12) of a triplet is selected such that the ratio of the bandwidth to a mean wavelength of the passband of a narrowband interference filter (12) is approximately 4%.

3. The stereo-projection device according to any of the preceding claims, **characterized in that** the color wheel (1) has at least two triplets and the mean wavelengths of the passband of the interference filters (12) of the same color are selected such that they are arranged substantially symmetrically about the following symmetry wavelengths for blue 450 nm, for green 540 nm and for red 630 nm.

4. The stereo-projection device according to claim 3, **characterized in that** the passbands of the interference filters (12) of the same color have a distance from one another of approximately 10 nm.

5. The stereo-projection device according to claims 3 and 4, **characterized in that** the passbands of the red interference filters (12, R1, R2) are selected from 660 to 635 nm and from 625 to 600 nm, respectively, the passbands of the green interference filters (12, G1, G2) from 565 to 545 nm and from 535 to 515 nm, respectively, the passbands of the blue interference filters (12, B1, B2) from 470 to 455 nm and from 445 to 430 nm, respectively.

6. The stereo-projection device according to any of the preceding claims 3 to 5, **characterized in that** interference filters (12) of the same color of a plurality of triplets are arranged successively in a circle on the color wheel (1).

## Revendications

1. Dispositif de projection stéréoscopique comportant une source de lumière (5), une roue chromatique (1) pourvue de filtres disposés en cercle, une unité d'imagerie (7), une optique de projection (8) et une commande de synchronisation de l'unité d'imagerie avec la roue chromatique (1), les filtres comportant un triplet présentant chacun l'une des couleurs rouge, verte ou bleue, **caractérisé en ce que** les filtres de la roue chromatique sont conçus sous forme de filtres d'interférence (12), **en ce que** la roue chromatique (1) présente une pluralité de triplets de filtres d'interférence (12), ce qui porte à au moins six le nombre total de filtres d'interférence (12) disposés en cercle et présentant bandes passantes différentes, les triplets présentant chacun un filtre d'interférence (12) de couleurs rouge (R1, R2), verte (G1, G2), bleue (B1, B2), les filtres d'interférence (12) étant des filtres à bande étroite ayant une largeur de bande inférieure à 30 nm, et la largeur de bande des filtres d'interférence à bande étroite (12) d'un triplet de longueur d'onde supérieure étant choisie comme étant supérieure à la largeur de bande des filtres d'interférence (12) de longueur d'onde inférieure.

2. Dispositif de projection stéréoscopique selon la revendication 2, **caractérisé en ce que** la largeur de bande d'un filtre d'interférence (12) d'un triplet est choisie de telle sorte que le rapport de la largeur de bande à la longueur d'onde moyenne de la bande passante d'un filtre d'interférence à bande étroite (12) est d'environ 4 %.

3. Dispositif de projection stéréoscopique selon l'une des revendications précédentes, **caractérisé en ce que** la roue chromatique (1) présente au moins deux triplets, et **en ce que** les longueurs d'onde moyennes de la bande passante des filtres d'interférence (12) de même couleur sont choisies de telle sorte qu'elles sont disposées de façon sensiblement symétrique autour des longueurs d'onde symétriques suivantes : 450 nm pour le bleu, 540 nm pour le vert et 630 nm pour le rouge.

4. Dispositif de projection stéréoscopique selon la revendication 3, **caractérisé en ce que** les bandes passantes des filtres d'interférence (12) de même couleur sont séparés les unes des autres d'un intervalle d'environ 10 nm.

5. Dispositif de projection stéréoscopique selon les revendications 3 et 4, **caractérisé en ce que** les bandes passantes des filtres d'interférence rouges (12, R1, R2) sont choisies entre 660 et 635 nm ou entre 625 et 600 nm, **en ce que** les bandes passantes des filtres d'interférence verts (12, G1, G2) sont choisies entre 565 et 545 nm ou entre 535 et 515 nm, et **en ce que** les bandes passantes des filtres d'interférence bleus (12, B1, B2) sont choisies entre 470 et 455 nm ou entre 445 et 430 nm.

6. Dispositif de projection stéréoscopique selon l'une des revendications 3 à 5 précédentes, **caractérisé en ce que** des filtres d'interférence (12) de même couleur d'une pluralité de triplets sont disposés successivement en cercle sur la roue chromatique (1).
